# EUROPEAN PATENT APPLICATION

(11) **EP 1 426 845 A1**
(43) Date of publication of application: **09.06.2004**
(21) Application number: 02738763.8
(22) Date of filing: 19.06.2002
(51) Int. Cl.: G06F 1/00, G06F 15/00

(54) **METHOD FOR AUTHENTICATION OF COMPUTER PROGRAM STORED IN MEDIUM**

(30) Priority: 14.09.2001 JP 2001280775; 23.05.2002 JP 2002149799
(71) Applicant: Sony Computer Entertainment Inc., Tokyo 107-0052 (JP)
(72) Inventor: KIMOTO, Yousuke, c/o SONY COMPUTER ENT. INC., Tokyo 107-0052 (JP); KAWANISHI, Izumi, c/o SONY COMPUTER ENT. INC., Tokyo 107-0052 (JP); OKADA, Toyoshi, c/o SONY COMPUTER ENT. INC., Tokyo 107-0052 (JP); SHIMADA, Muneki, c/o SONY COMPUTER ENT. INC., Tokyo 107-0052 (JP); NAKAMURA, Tadashi, c/o SONY COMPUTER ENT. INC., Tokyo 107-0052 (JP); KOMAKI, Kenjiro, c/o SONY COMPUTER ENT. INC., Tokyo 107-0052 (JP); KANEE, Kazuhiro, c/o SONY COMPUTER ENT. INC., Tokyo 107-0052 (JP); KUBO, Makoto, c/o SONY COMPUTER ENTERTAINMENT INC, Tokyo 107-0052 (JP); NAKAMURA, Mitsuhiro, c/o SONY COMPUTER ENT. INC., Tokyo 107-0052 (JP); SHIBUYA, Ryoichi, c/o SONY COMPUTER ENT. INC., Tokyo 107-0052 (JP); SASAKI, Yasuo, c/o SONY COMPUTER ENTERTAINMENT INC, Tokyo 107-0052 (JP)
(74) Representative: DeVile, Jonathan Mark, Dr.
(86) International application number: PCT/JP2002/006100
(87) International publication number: WO 2003/025719

(57) **Abstract**

A client terminal device at a user side transmits a plurality of IDs in an arbitrary arrangement order to an authentication server machine on a network on the basis of a device environment of the user when applying a license authentication for software. The authentication server machine executes the license authentication using an authentication program and ID issue program that correspond to the software for which the license authentication is applied, and issues an ID in the ID form corresponding to the software.

## Description

### TECHNICAL FIELD

The present invention relates to an authentication method, a storage medium having stored therein an authentication program, the authentication program, an authentication server machine, a client terminal device, and an authentication system, preferable when provided in a license authentication system for performing a license authentication of a computer program stored in a medium such as an optical disk, a semiconductor memory, or the like, where the optical disk includes a CD-ROM, a DVD-ROM or the like.

### BACKGROUND ART

At present, in order to prevent unauthorized duplication of computer programs, software which charges a user with license authentication when used or installed, has been increasing. The license authentication generally follows the procedure hereinbelow.

When the user loads a medium having stored therein a desired computer program on a client terminal device, the client terminal device reads out the computer program from the loaded medium in a so-called Auto Run manner, then stores it in a secondary storage medium such as, for example, a hard disk, and reads out a program of an authentication wizard from the medium, and then displays an image of the authentication wizard on a monitor device according to this program.

On this display image, displayed are input columns of a "present date" detected based on a timer provided in the client terminal device, an "install identification number (install ID)" individually assigned to each medium, and a "confirmation identification number (confirmation ID)" notified to the user when the license for the computer program is approved from an administration center side.

The user informs the administration center side of the "present date" and the "install ID" via a network or a telephone in accordance with the displayed contents of the display image.

The administration center side confirms the "present date" informed from the user, and collates the "install ID" informed from the user with an install ID of each medium stored in a database, to thereby detect whether or not the install ID informed from the user is legitimate and whether or not installation has been done before from the medium having the install ID.

When it is determined that the install ID informed from the user is a legitimate install ID and the installation of the computer program has not been done from the medium of the install ID, the administration center side notifies the user of the "confirmation ID" which approves the license of the computer program via the network or the telephone, and registers the "present date", the "install ID", "information indicating to be installed" and the "confirmation ID" in the database.

Next, the user inputs the "confirmation ID" notified from this administration center side in the input column of the confirmation ID of the display image. Thereby, the license authentication procedure is terminated.

When such a license authentication procedure is not legitimately terminated, the client terminal device restricts a use of all the functions or a part of the functions of the installed computer program by allowing display of a file but inhibiting from newly creating and editing a file, for example.

Therefore, when the user desires to use all the functions of the computer program, he or she needs to legitimately terminate the license authentication procedure. Accordingly, such a license authentication procedure to be charged on a user may leads to the prevention of the unauthorized duplication of the computer program.

However, in the authentication system for executing the conventional license authentication procedure, information collected from the user are fixed in advance, which are the "present date", the "install ID" assigned to the medium, and the like, and the authentication system itself is fixedly configured so as to execute the license authentication based on the fixed information that it collects, which has been the advantage in that the authentication system is not able to flexibly correspond to the changes in a specification.

The present invention has been made in view of the above problems, and it is an object to provide an authentication method, a storage medium having stored therein an authentication program, the authentication program, an authentication server machine, a client terminal device, and an authentication system, all of which are capable of flexibly corresponding to the changes in the specification.

### DISCLOSURE OF THE INVENTION

The present invention is characterized by receiving specification information to specify an authentication target which is to apply the authentication, receiving user specification information for specifying a user applying the authentication, selecting an authentication program corresponding to an authentication target that is indicated by the specification information, and subjecting the authentication target to the authentication processing based on the selected authentication program for the user indicated by the user specification information.

That is, according to the present invention, when the client terminal device applies the authentication, the authentication server machine selects an authentication program or an identification information issue program that corresponds to the applied authentication target and executes an authentication processing or an issue processing of identification information. This thus allows for flexibly corresponding to the changes in the specification of the authentication method or the issue form of the identification information on the client terminal device side.

### BRIEF DESCRIPTION OF DRAWINGS

FIG. 1 is a diagram schematically showing a system configuration of an authentication system according to an embodiment to which the present invention is applied;
FIG. 2 is a diagram showing a software system configuration of an authentication server machine provided in the authentication system according to the embodiment;
FIG. 3 is a diagram for describing stored contents of an application management table stored in an authentication database of the authentication server machine;
FIG. 4 is a diagram showing a software system configuration of a client terminal device provided in the authentication system according to the embodiment;
FIG. 5 is a diagram showing a data configuration of an authentication information packet transmitted from the client terminal device to the authentication server machine;
FIG. 6 is a diagram for describing a sequence order of authentication information in the authentication information packet;
FIG. 7 is a flow chart for describing a flow of a license authentication processing in the authentication system according to the embodiment;
FIG. 8 is a diagram showing a data configuration of an authentication result information packet returned from the authentication server machine to the client terminal device;
FIG. 9 is a flow chart showing a flow from when a license authentication is applied to when a processing for desired software is executed based on a license authentication result in a client terminal device of an authentication system according to an applied example;
FIG. 10 is a diagram for describing contents of the authentication information packet transmitted from the client terminal device to the authentication server machine in the authentication system according to the applied example;
FIG. 11 is a flow chart showing a flow from when the authentication information is received to when the authentication result information is returned in the authentication server machine of the authentication system according to the applied example;
FIG. 12 is a diagram for describing stored contents of a registration ID management table provided in the authentication database of the authentication server machine in the authentication system according to the applied example; and
FIG. 13 is a diagram for describing contents of the authentication result information returned from the authentication server machine to the client terminal device in the authentication system according to the applied example.

### BEST MODE FOR CARRYING OUT THE INVENTION

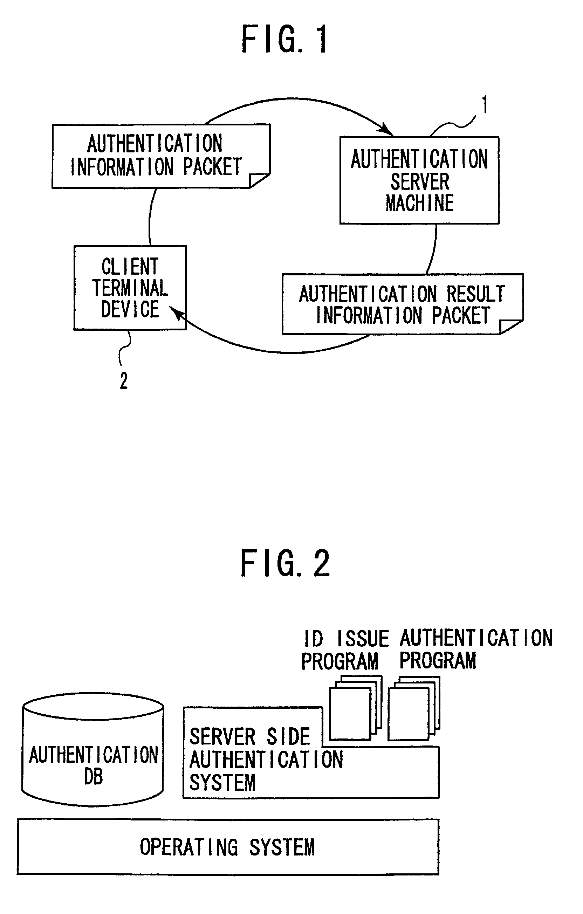

The present invention can be applied to an authentication system as shown in FIG. 1.

### Configuration of Authentication System

An authentication system shown in FIG. 1 comprises an authentication server machine **1** connected to a predetermined network such as the Internet, which executes various authentication processings such as license authentication of software, a processing for authenticating whether a user thereof is a legitimate user who is a target of a predetermined service; and a client terminal device **2** of each user similarly connected to a predetermined network.

Furthermore, the client terminal device **2** transmits an authentication information packet including information used in the authentication processing to the authentication server machine **1**, and the authentication server machine **1** transmits an authentication result information packet including information on an authentication result executed based on the received authentication information packet. Note that the authentication system shown in FIG. 1 is able to attain an encryption communication utilizing SSL (Secure Socket Layer) or the like between the authentication server machine **1** and the client terminal device **2**.

### Configuration of Authentication Server Machine

The above authentication server machine **1** comprises, as shown in FIG. 2, an operating system for realizing a basic operation of the authentication server machine **1**, a server side authentication system, and an authentication database (authentication DB), as principal components. The above server side authentication system has a plurality of types of ID issue programs corresponding to issue forms of identification information (ID) of an authentication target, and a plurality of types of authentication programs provided for each authentication target.

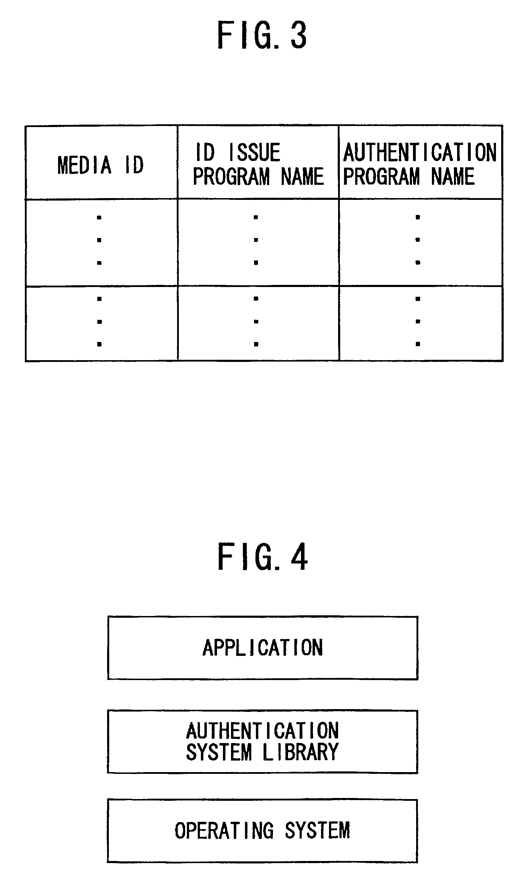

The above authentication DB stores ID issue information and information used at authentication processing. Further, in the case that license authentication of software (application) is executed, the authentication DB stores an application management table in which authentication method and ID issue program used for each software are described. Specifically, the application management table has a configuration as shown in FIG. 3, and stores a software ID (= media ID. Software name is also available) for specifying software, an ID issue program name, and an authentication program name used when the license authentication of the software is executed in the form of table and in correspondence to each software.

### Configuration of Client Terminal Device

The above client terminal device **2** is configured with a video game device or a personal computer device which comprises a network interface and a secondary storage medium such as a hard disk drive (HDD) or the like, and has, as shown in FIG. 4, an operating system for realizing a basic operation of the client terminal device **2**, an authentication system library, and an application for realizing a predetermined function.

The above authentication system library acquires authentication information corresponding to the authentication target from the client terminal device **2** or the client terminal device **2** and peripheral devices thereof, and transmits it to the authentication server machine **1**.

The above authentication information may be entered by the user. Further, the above authentication information may be preferably user specifiable information, and can include a unique ID (media ID) uniquely assigned to a storage medium in which a MAC address (Media Access Control address) or an application is stored, or numeric denoting a user's birthday or alphabets of the user name.

### Authentication Application Operation of Client Terminal Device

In the authentication system having such a configuration, when applying an authentication application for a desired authentication target, the user operates the client terminal device **2** to enter (or select) the authentication target, thereby activating the authentication system library. The authentication system library thus operates as follows. Note that the authentication system library may be configured to be automatically activated when the user enters the authentication target (Auto Run).

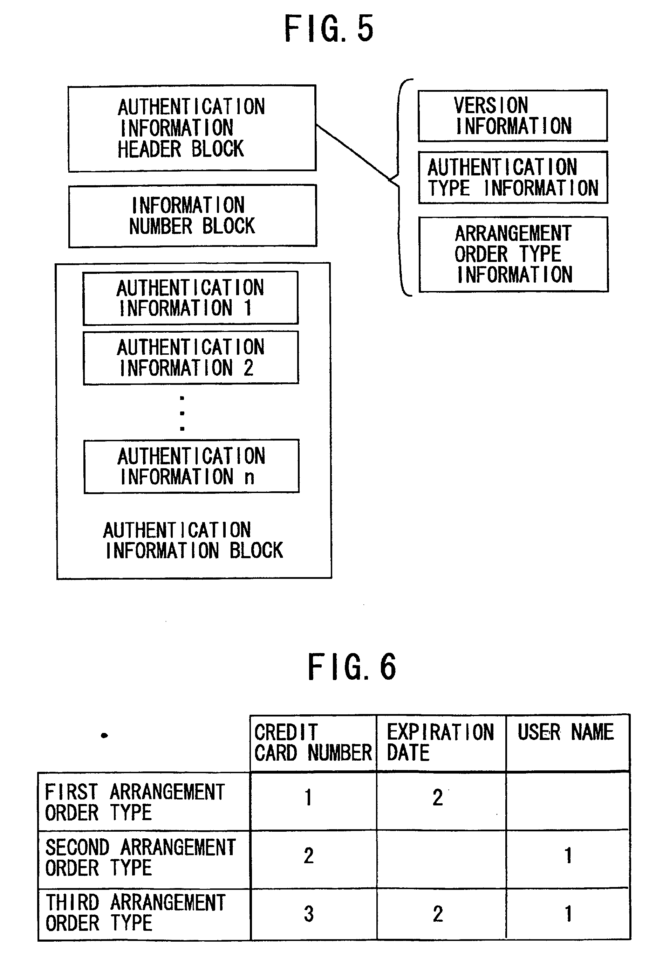

At first, when the authentication target is entered by the user, the authentication system library acquires a plurality of authentication information (authentication information 1 to authentication information n (n shows natural number)) corresponding to the entered authentication target. The authentication system library uses version information indicating a version number of the authentication system library, authentication type information indicating an authentication method (authentication program) used in the authentication processing of the authentication target, and arrangement order type information indicating an arrangement order of a plurality of acquired authentication information so as to form an authentication information header block (refer to FIG. 5).

Next, the authentication system library forms an information number block (refer to FIG. 5) indicating the number (n) of the authentication information by referring to the number of the acquired authentication information. After forming the information number block, the authentication system library arranges a plurality of the acquired authentication information in an arrangement order indicated by the arrangement order type information so as to form an authentication information block (refer to FIG. 5). After the authentication system library forms the authentication information header block, the information number block, and the authentication information block, it packetizes these blocks and forms the authentication information packet to transmit it to the authentication server machine **1**. When a plurality of authentication information are arranged, the authentication system library may arrange a plurality of authentication information by mixing dummy blocks which are not the authentication information according to user's instruction or settings, and then may form the authentication information block.

Here, arrangement order types for the above each arrangement order are determined in advance by a table shown in FIG. 6, and the authentication system library arbitrarily selects the arrangement order type, and refers to this table to arrange a plurality of authentication information in the order corresponding to the selected arrangement order type. The example of the table in FIG. 6 is an example in which the authentication target is a credit card of the user, where a first to third arrangement order types, and three type of the authentication information such as a "credit card number" of 16 bit-length, an "expiration date of credit card" of 8 bit-length, and a "user name" of 4 bit-length are prescribed. Further, numerals of "1", "2", and "3" in the drawing show the arrangement order of the authentication information.

In the case where the authentication information are arranged according to the table shown in FIG. 6, when the first arrangement order type is selected, the authentication system library arranges the authentication information in the order of the 16 bit-long credit card number, the 8 bit-long expiration date of credit card to form the 24 bit-long authentication information block. Further, similarly, the authentication system library arranges the authentication information in the order of the 4 bit-long user name and the 16 bit-long credit card number when the second arrangement order type is selected, and in the order of the 4 bit-long user name, the 8 bit-long expiration date of credit card, and the 16 bit-long credit card number when the third arrangement order type is selected to form the 20 bit-long and 28 bit-long authentication information block, respectively.

As described above, since the above client terminal device 2 is configured so as to arrange a plurality of authentication information corresponding to the authentication target in the arbitrary order to transmit it to the authentication server machine **1** side. According to such a configuration, even when the authentication information packet is intercepted by the third party, it is prevented that the authentication information is separated from the inside of the authentication information packet and individually read out, so that the data communication can be safely attained. Further, when the authentication information is arranged by mixing the dummy blocks which are not the authentication information, it is possible to make it difficult that the authentication information is correctly read out, so that the data communication can be attained more safely.

### Authentication Processing Operation of Authentication Server Machine

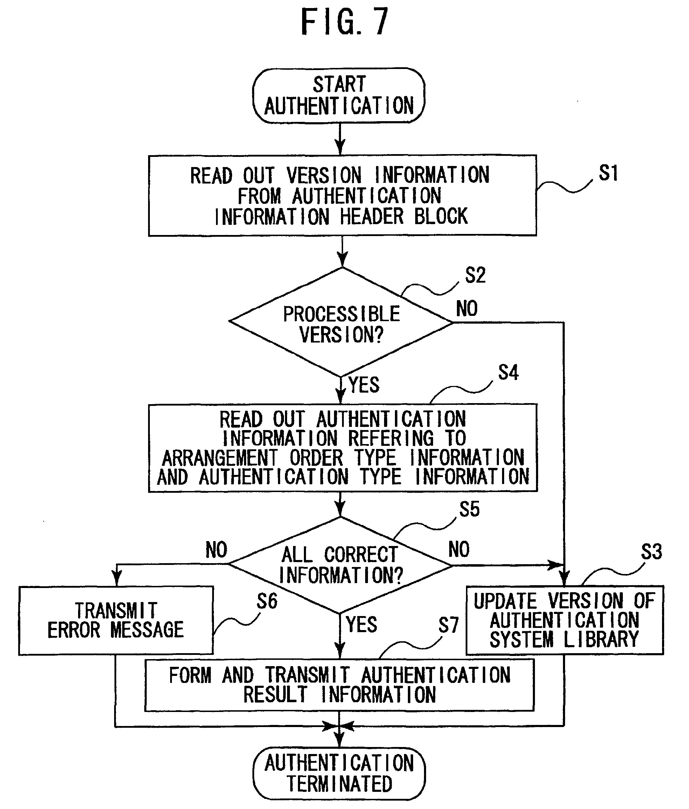

Next, with reference to the flow chart shown in FIG. 7, the authentication information packet transmitted from the client terminal device **2** is utilized to describe an operation of the authentication server machine when the authentication processing of the authentication target is executed.

The flow chart show in FIG. 7 starts when the authentication server machine **1** receives the authentication information packet transmitted from the client terminal device **2** of the user, and this processing proceeds to a processing of step S1.

In the processing of step S1, the authentication server machine **1** reads out the version information from the authentication information header block of the received authentication information packet. Thereby, the processing of step S1 is completed, and this authentication processing proceeds from the processing of step S1 to a processing of step S2.

In the processing of step S2, the authentication server machine **1** refers to the read out version information and determines whether or not the authentication system library of the client terminal device **2** is a version for which the authentication processing can be executed. As a result of the determination, in the case of a version for which the authentication processing can be executed, the authentication server machine **1** advances this authentication processing from the processing of step S2 to a processing of step S4. On the other hand, in the case of a version for which the authentication processing cannot be executed, the authentication server machine **1** advances this authentication processing from the processing of step S2 to a processing of step S3.

The authentication server machine **1** comprises the authentication program corresponding to the authentication system library of the past version so that the authentication processing may also be executed in correspondence to the authentication system library of the past version, and is configured so that the authentication processing is not executed with respect to the authentication system library of a specific version.

In the processing of step S3, the authentication server machine **1** downloads the authentication system library of a new version for which the authentication processing can be executed into the client terminal device **2**, and updates the authentication system library of the client terminal device **2** side. This allows the client terminal device **2** to take the authentication processing at the next and succeeding times, so that a series of authentication processings is completed.

When the authentication system library is updated, the authentication server machine **1** may transmit an error message such as "install authentication system library of new version, and retry authentication processing application" to the client terminal device **2**, and update the authentication system library according to a start instruction from the client terminal device **2**. Alternatively, the user may install the authentication system library of the new version from the storage medium (for example, a CD-ROM, a DVD-ROM, or the like) into the client terminal device **2** by him or herself.

In the processing of step S4, the authentication server machine **1** refers to the arrangement order type information and the authentication type information in the authentication information header block, and specifies and reads out the respective authentication information constituting the authentication information block. In the case that the respective authentication information can be specified only by the arrangement order type information, the authentication server machine **1** may not refer to the authentication type information. Specifically, the authentication server machine **1** preliminarily stores a table having the same structure as that shown in Fig. 6 in the authentication DB, and when the authentication system library of the client terminal device **2** refers to the table shown in FIG. 6 to arrange the authentication information, the authentication server machine **1** collates the arrangement order type indicated by the arrangement order type information with the arrangement order type indicated by the table in the authentication DB. The authentication server machine **1** reads out the respective authentication information constituting the authentication information block by referring to an arrangement order corresponding to the collated arrangement order type. For example, when the arrangement order type is the third arrangement order type shown in FIG. 6 and a credit card number, an expiration date of credit card, and a user name are 16, 8, and 4 bit-long, respectively, the authentication server machine **1** reads out the first 4 bit-long data of the 28 bit-long authentication information block as a user name, the next 8 bit-long data as an expiration date, and the last 16 bit-long data as a credit card number. Thereby, the processing of step S4 is completed, and this authentication processing proceeds from the processing of step S4 to a processing of step S5.

In the processing of step S5, the authentication server machine **1** executes the authentication processing of the respective read out authentication information according to the authentication method indicated by the authentication type information that is included in the authentication header block. Specifically, as the result of the processing in step S4, when the authentication server machine **1** reads out three types of authentication information such as the "credit card number", the "expiration date of credit card", and the "user name", the authentication server machine **1** compares the read out information with the information such as the "credit card number", the "expiration date of credit card", and the "user name" stored in advance, to thereby execute the authentication processing of the respective authentication information. When the authentication of all the authentication information has succeeded, this authentication processing proceeds from the processing of step S5 to a processing of step S7. On the other hand, when the authentication of part of or all the authentication information has failed, this authentication processing proceeds from the processing of step 5 to a processing of step S6.

In the case that the authentication server machine **1** has a plurality of authentication programs in the authentication DB, the authentication server machine **1** selects the authentication program designated by the authentication type information from among a plurality of authentication programs, and executes the authentication processing of the authentication information based on the selected authentication program.

In the processing in step S6, the authentication server machine **1** transmits an error message such as, for example, "authentication not succeeded" to the client terminal device **2** of the user. In this case, the authentication has not been executed with respect to the authentication target desired by the user, so that a series of authentication processings is terminated.

In step S7, the authentication server machine **1** transmits the authentication result to the client terminal device **2** of the user. Thereby, the processing in step S7 is completed, so that a series of authentication processings is terminated.

As described above, the authentication server machine **1** refers to the version information of the authentication system library informed by the client terminal device **2** to execute the authentication processing of authentication target. According to such a configuration, the client terminal device **2** can appropriately change the version of the authentication system library, and at the same time, the authentication server machine **1** can flexibly correspond to the version change of the authentication system library of the client terminal device **2** side.

Further, the client terminal device **2** transmits the arrangement order type information indicating arrangement order for a plurality of authentication information together with a plurality of authentication information arranged in arbitrary order, so that the authentication server machine **1** can reads out the respective authentication information constituting authentication information block correctly.

Moreover, since the authentication server machine **1** stores a plurality of authentication programs in authentication DB, the authentication server machine **1** can flexibly correspond to the new authentication method, and, at the same time, can correct and modify the authentication method at ease by correcting and modifying the authentication program.

### Authentication Result Notification Operation of Authentication Server Machine

When transmitting the authentication result to the client terminal device **2**, the authentication server machine **1** may arrange a plurality of authentication results in an arbitrary order and transmit them as the authentication result information packet to the client terminal device **2** side, similarly to when the client terminal device **2** transmits the authentication information packet to the authentication server machine **1**. According to such a processing, for example, even when the authentication result information packet is intercepted by the third party, it is prevented that the authentication results are separated from the inside of the authentication result information packet to be individually read out, so that the data communication can be safely attained.

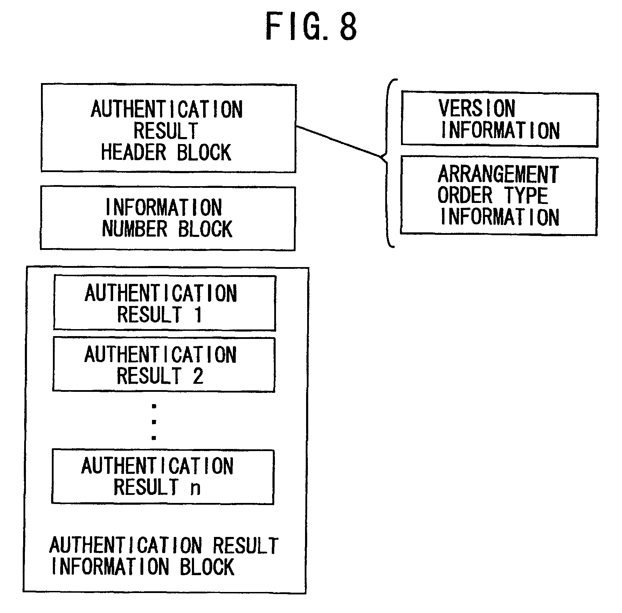

In this case, in a specific manner as shown in FIG. 8, the authentication server machine **1** packetizes the authentication result header block, the information number block indicating the number of the authentication result information, and the authentication result information block comprising a plurality of authentication results (authentication result **1** to authentication result n (n shows natural number)) to form the authentication result information packet. Here, the authentication result header block is configured with the version information indicating the version number of the authentication processing program at the authentication server machine **1** side, and the arrangement order type information indicating the arrangement order of a plurality of authentication results to be transmitted to the client terminal device **2** side of the user. Note that the number of authentication results is changed according to the authentication program designated by the authentication type information, and the authentication results for the number formed according to the authentication program are stored.

When the client terminal device **2** of the user receives such an authentication result information packet, the client terminal device **2** reads out the respective authentication results constituting the authentication result information block according to the arrangement order indicated by the arrangement order type information in the authentication result header. The client terminal device **2** executes a predetermined processing corresponding to the authentication target based on the read out authentication results.

### Application Example

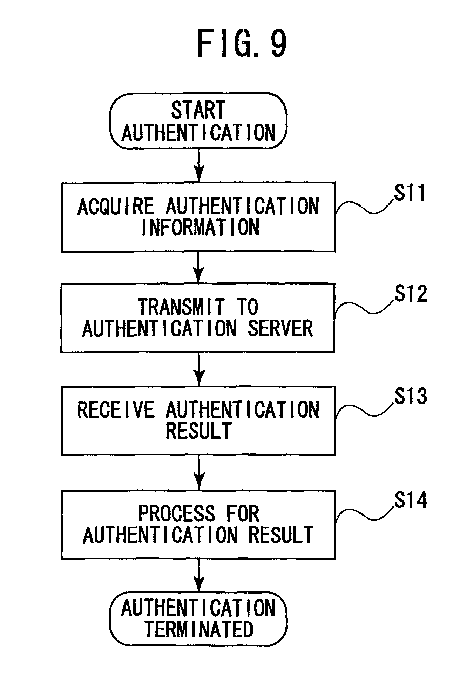

The above-mentioned authentication system can be applied to the license authentication of software (application). As shown in the flow chart of FIG. 9, in this case, the authentication system library of the client terminal device **2** acquires a plurality of IDs corresponding to the software for which the license authentication is applied (step S11), and forms the authentication information packet. The authentication system library then sends the formed authentication information packet to authentication server machine **1** (step S12).

It is noted here that, as the ID to be acquired by the authentication system library, the user specifiable information is preferable. As an example, the MAC address can be employed. Furthermore, the ID may be manually entered by the user, or alternatively the existing ID may be selected.

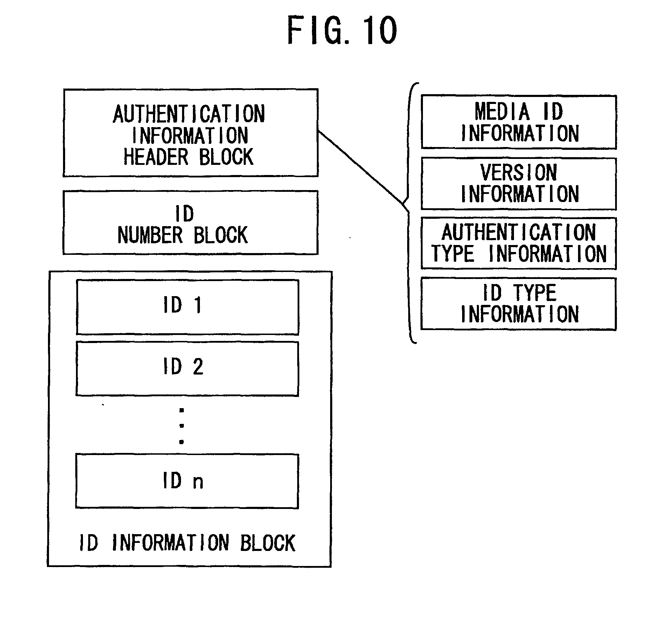

In the case the license authentication of software (application) is executed, the authentication system library forms authentication information packet having the configuration as shown in FIG. 10. The authentication information packet shown in FIG. 10 comprises a media ID for specifying the software for which the license authentication is applied, the version information indicating the version of the authentication system library used at the client terminal device **2** side, the authentication type information for designating the authentication program corresponding to the software, and the ID type information for designating the type of the acquired ID and the arrangement order of the acquired ID in authentication header block, unlike the authentication information packet shown in FIG. 5. As the ID number information block and ID information block is the same configuration as the information number block and the authentication information number block shown in FIG. 5, the explanation thereof is omitted.

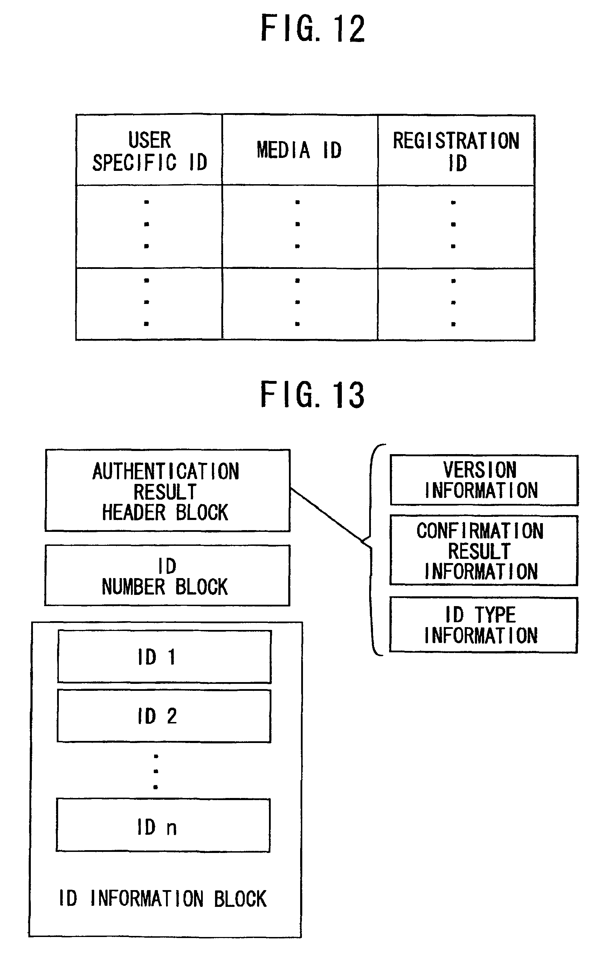

In receiving the authentication information packet, the authentication server machine **1** reads out ID information from ID information block by referring to ID type information in the authentication header block, and executes the authentication processing based on the respective ID information. The authentication server machine **1** then issues one or a plurality of registration IDs when authenticating a license, packetizes the registration IDs together with the information indicating the authentication result (authentication result information packet: FIG. 13), and sends it back to the client terminal device **2**.

When receiving this authentication result information packet, the client terminal device **2** executes the processing corresponding to the authentication result of the software for which the user has applied for the license authentication, as shown in a flowchart of Fig. 9 (step S 14). Specifically, when the received authentication result is the negative authentication result with respect to the license application of the software, the client terminal device **2** displays the error message on the monitor device such as "license has not been authenticated" indicating that the license has not been authenticated. In such a negative authentication result, the user cannot legitimately use the software. On the contrary, when the received authentication result is the positive authentication result with respect to the license application of the software, the client terminal device **2** executes the following processing based on the registration ID issued at the authentication server machine **1**.

At first, until the license is authenticated, when the install of the application program stored in the software is not permitted, this protect is released to execute a processing for permitting the application program to be installed. Further, until the license is authenticated, when part of the functions of the application program installed from the software is restricted, a processing is executed where the part of the functions restricted in use is made usable and consequently all the functions made available. As described above, the user whose software license has been authenticated can substantially freely use the application program of the software.

As described above, the client terminal device **2** is configured to arrange a plurality of IDs corresponding to the software for which license authentication is applied in the arbitrary order to transmit it to the authentication server machine **1** side, when software license is authenticated. According to such configuration, even when the authentication information packet is intercepted by the third party, it is prevented that the Ids are separated from the inside of the authentication information packet and individually read out, so that the data communication can be safely attained.

Further, the client terminal device **2** sends the ID type information indicating the arrangement order for a plurality of IDs together with a plurality of IDs arranged in arbitrary order, so that the authentication server machine **1** can read out correctly the respective ID comprising ID information block.

### License Authentication Operation of Authentication Server Machine

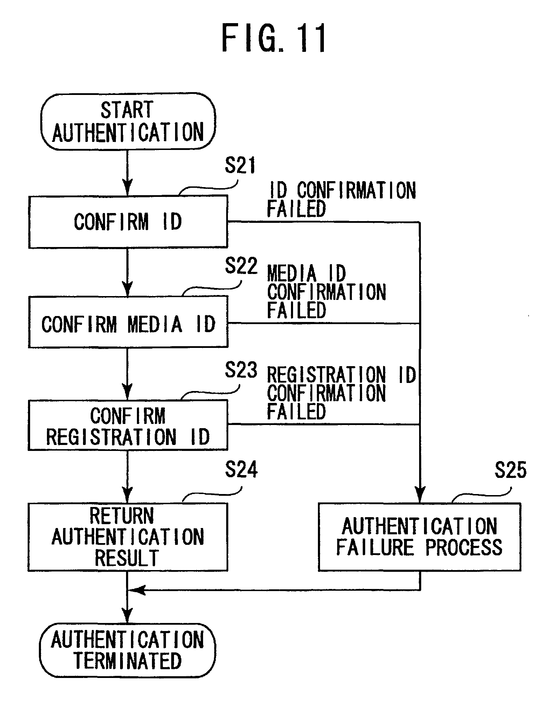

In response to the receipt of the authentication information packet, the authentication server machine **1** executes the license authentication as follows. In the following, the operation of the authentication server machine **1** when executing the license authentication is explained with reference to the flow chart shown in FIG. 11.

When this flow chart starts, the authentication server machine **1** reads out the authentication type information in the received authentication information packet at first, and executes the following license authentication processing based on an authentication program designated by this authentication type information from among authentication programs stored in the authentication DB. The flow of the license authentication processing depends on the authentication program designated by the authentication type information. Therefore, it is to be understood that the flow of the license authentication processing described later is a case where the authentication program corresponding to this flow is designated as the authentication program of the software and is nothing but an example.

That is, in the case of this example, in step S21, the authentication server machine **1** confirms every ID in the received authentication information packet. Specifically, in this case, in the authentication DB of the authentication server machine **1**, the respective IDs with respect to the client terminal device **2**, the peripheral devices thereof, and the like used by every user are registered in advance, and the authentication server machine **1** manages every user by a cluster of respective IDs (ID group).

Therefore, in step S21, the authentication server machine **1** collates the respective IDs in the received authentication information packet with the respective IDs in the ID group of the users in the authentication DB, respectively, and when the respective IDs in the received authentication information packet are all coincided with the respective IDs of the ID group in the authentication DB, this license authentication processing is advanced to step S22. When even one of the respective IDs in the received authentication information packet is not coincided with each ID of the ID group in the authentication DB, this license authentication processing is advanced to step S25.

In step S25, since there is a difference between the respective IDs of the above authentication information packet and the respective IDs of the ID group of the user stored in the authentication DB, the authentication server machine **1** returns the error message such as, for example, "license cannot be authenticated" or the like to the client terminal device 2 and terminates the license authentication processing shown in the flow chart in FIG. 11.

Next, when this license authentication processing is advanced to step S22, the authentication server machine **1** confirms the media ID to confirm whether or not the media ID uniquely assigned to the software which is the authentication target of the license for the user is a legitimate media ID. Specifically, in the authentication DB of the authentication server machine **1**, the unique IDs respectively assigned to the respective media produced by the software maker are all stored. Therefore, when reading out the media ID from the authentication header, the authentication server machine **1** collates the read media ID with every ID stored in the authentication DB.

The media ID read from the authentication header does not exist in the respective IDs stored in this authentication DB, which means that the media ID read from the authentication header is not the legitimate media ID. The authentication server machine **1** consequently advances this license authentication processing to step S25. In this step S25, the error message such as, for example, "license cannot be authenticated" is returned to the client terminal device 2 and the license authentication processing shown in the flow chart in FIG. 11 is terminated.

On the contrary, the media ID read from the authentication header exists in the respective media IDs stored in the authentication DB, which means that the media ID read from the authentication header is the legitimate media ID. Consequently, the authentication server machine **1** advances the license authentication processing to the confirmation processing of the registration ID which is described later.

In step S23, the authentication server machine **1** confirms the registration ID to confirm whether or not the registration ID has already been issued to the software which is the authentication target of the license for the user. Specifically, the authentication DB of the authentication server machine **1** is provided with, as shown in FIG. 12, the registration ID management table comprising the ID for specifying each user in the above ID group or the like, the media ID of the software license-authenticated for the user, the registration ID issued when the license has been authenticated for the software, and the like.

Therefore, the authentication server machine **1** specifies the user by referring to the registration ID management table based on the above ID group, and detects whether or not the registration ID has already been issued for the software having the media ID based on a media ID assigned to the authentication information header.

The registration ID for the media ID is not stored in the registration ID management table, which means that the registration ID has not been issued to the software having the media ID. The authentication server machine **1** consequently refers to the application management table described with reference to FIG. 3 and selects an ID issue program designated for the software having the media ID from among a plurality of ID issue programs as shown in FIG. 2, based on the media ID assigned to the authentication information header.

On the basis of the selected ID issue program, one or a plurality of new registration IDs are issued, and the issued registration IDs are stored in the registration ID management table. The registration ID stored in this registration ID management table is to be used for the confirmation processing of the registration ID, hereinafter.

On the contrary, the registration ID for the media ID is stored in the registration ID management table, which means that the registration ID has been already issued for the software having the media ID. The authentication server machine **1** consequently advances this license authentication processing to step S25, and returns the error message such as, for example, "the license for the software has been already authenticated" to the client terminal device **2**, so that the license authentication processing shown in the flow chart in FIG. 11 is terminated.

For example, when the registration ID exists (has been used) for the software having the media ID, other processings may be performed. For example, the use of the application program is permitted only in a predetermined period as a trial period. These processings also depend on the authentication programs.

Next, when such a confirmation processing of the registration ID is terminated, the authentication server machine **1** forms the confirmation result information packet, and returns it to the client terminal device **2** of the user.

FIG. 13 shows a schematic diagram of this confirmation result information packet. As shown in FIG. 13, the confirmation result information packet is configured by packetizing the authentication result header block, the ID number information block indicating the number of the issued registration IDs, and one or a plurality of registration IDs (ID1 to IDn: n is natural number). The example shown in FIG. 13 is an example in which a plurality of registration IDs are issued. Further, the registration ID assigned succeeding to the ID number information block which is the information indicating the number of the issued registration IDs is configured to be added for the number indicated by this ID number information block.

The authentication result header block is configured with the version information indicating the version of the authentication program used when the authentication information from the client terminal device **2** is processed at the authentication server machine **1** side; the confirmation result information (confirmation result) respectively indicating the authentication information confirmation result acquired in the above step S21, the media ID confirmation result acquired in step S22, and the registration ID confirmation result acquired in step S23; and the ID type information (ID type) for designating the arrangement order of the issued registration ID. The ID type information is the information for designating the ID type indicating the arrangement order of the issued ID from among a plurality of ID types such as, for example, a first ID type to a third ID type as described with reference to FIG. 6.

When the client terminal device **2** receives such authentication result information, the client terminal device **2** uses the processing program of the version designated by the version information of this authentication result information to read out the respective registration IDs according to the arrangement order designated by the ID type information and to store and control this registration ID in the secondary storage medium such as, for example, a HDD, on the basis of the authentication system library.

According to the authentication result information of the authentication result header, the install of the application program of the license-authenticated software is permitted, alternatively, part of or all the functions restricted so far are made usable by the installed application program. Thereby, the license authentication in the authentication server machine **1** and the client terminal device **2** is legitimately terminated, so that the user can substantially freely the desired application program.

As described above, when authenticating the software license, the authentication server machine **1** is configured to arrange a plurality of registration IDs corresponding to the software for which the license authentication is performed in the arbitrary order to transmit it to the client terminal device **2** side. According to such configuration, even when the authentication result information packet is intercepted by the third party, it is prevented that the IDs are separated from the inside of the authentication result information packet and individually read out, so that the data communication can be safely attained.

Further, since the authentication server machine **1** stores a plurality of ID issue programs in the authentication DB, the authentication server machine **1** can flexibly correspond to the new ID issue method, and, at the same time, can correct and modify the ID issue method by correcting and modifying the ID issue program.

### Other Embodiment

Hereinbefore, the embodiment to which the invention made by the present inventors is applied is described, but the present invention is not limited by the descriptions and the drawings which form part of the disclosure of the present invention according to the embodiment.

For example, in the description of the above embodiment and application example, the license authentication is performed at the time of install of the application program or at the time of function restriction release of the installed application program, but the above license authentication may be charged on the user, for example, when the program with the predetermined function is downloaded and added to the installed application program through an online service, or the like.

Further, the table for prescribing a relation between the type of the authentication information to be acquired and the arrangement order of the respective acquired authentication information may be used fixedly in the state where the authentication system library remains installed in the client terminal device **2**, or may be used while being downloaded from the authentication server machine **1** or the like and being dynamically updated.

Further, the type of the arrangement order type or the number of items of authentication information prescribed in the above table and the arrangement order of the authentication information may be appropriately changed according to a design of the authentication system and the like.

Further, a timing of the above license authentication may be set to an arbitrary timing according to the authentication target.

Therefore, even other embodiments than the above embodiment may be employed, and various modifications can be performed according to the design and the like without departing from the technical spirit of the present invention.

### INDUSTRIAL APPLICABILITY

The present invention can be applied to a processing for license authentication of software and a processing for authenticating whether or not a user is a legitimate user to be a target of predetermined services.

## Claims

1. An authentication method comprising the steps of:
receiving specific information for specifying an authentication target for which an authentication is applied;
receiving user specification information for specifying a user who is applying for an authentication;
selecting an authentication program corresponding to the authentication target indicated by the specific information; and
executing an authentication processing for the authentication target based on the selected authentication program for a user indicated by the user specification information.

2. An authentication method according to claim 1, further comprising the steps of:
selecting an identification information issue program corresponding to the authentication target indicated by the specific information; and
executing an issue processing of authentication identification information indicating that the authentication target has been authenticated based on the selected identification information issue program.

3. An authentication method according to claim 1 or 2, further comprising the steps of:
receiving a plurality of identification information used for an authentication processing of an authentication target transmitted in an arbitrary order, and order information indicating the arbitrary order; and
recognizing the received identification information by referring to the order information,
and wherein the authentication processing and the issue processing of the authentication identification information are executed based on the recognized identification information.

4. An authentication method according to claim 3, wherein the step of receiving the plurality of identification information comprises a step of receiving the plurality of identification information acquired from a client terminal device of a user, or a client terminal device and peripheral devices thereof of a user, as the plurality of identification information used for the authentication processing of the authentication target.

5. An authentication method according to any one of claims 2 to 4, further comprising the steps of:
executing an issue processing of a plurality of authentication identification information indicating that the authentication target has been authenticated;
forming designation information for designating a transmission order of the plurality of issued authentication identification information; and
returning the designation information together with the plurality of authentication identification information to a client terminal device of a user who has applied for an authentication.

6. An authentication method according to any one of claims 1 to 5, further comprising the steps of:
receiving version information of an authentication system library of a client terminal device which has formed at least the specific information,
and wherein the authentication processing and the issue processing of the authentication identification information that correspond to a version indicated by the version information are executed.

7. A computer readable storage medium having stored therein an authentication program to be executed on a computer, the authentication program comprising:
a step of receiving specific information for specifying an authentication target for which an authentication is applied;
a step of receiving user specification information for specifying a user who is applying for an authentication;
a step of selecting an authentication program corresponding to the authentication target indicated by the specific information; and
a step of executing an authentication processing for the authentication target based on the selected authentication program for a user indicated by the user specification information.

8. A computer readable storage medium having stored therein an authentication program according to claim 7, the authentication program further comprising:
a step of selecting an identification information issue program corresponding to the authentication target indicated by the specific information; and
a step of executing an issue processing of authentication identification information indicating that the authentication target has been authenticated based on the selected identification information issue program.

9. A computer readable storage medium having stored therein an authentication program according to claim 7 or 8, the authentication program further comprising:
a step of receiving a plurality of identification information used for an authentication processing of an authentication target transmitted in an arbitrary order, and order information indicating the arbitrary order; and
a step of recognizing the respective identification information by referring to the order information,
and wherein the authentication processing and the issue processing of the authentication identification information are executed based on the recognized identification information.

10. A computer readable storage medium having stored therein an authentication program according to claim 9, wherein the step of receiving the plurality of identification information comprises a step of receiving the plurality of identification information acquired from a client terminal device of a user, or a client terminal device and peripheral devices thereof of a user, as the plurality of identification information used for the authentication processing of the authentication target.

11. A computer readable storage medium having stored therein an authentication program according to any one of claims 8 to 10, the authentication program further comprising:
a step of executing an issue processing of a plurality of authentication identification information indicating that the authentication target has been authenticated;
a step of forming designation information for designating a transmission order of the plurality of issued authentication identification information; and
a step of returning the designation information together with the plurality of authentication identification information to a client terminal device of a user who has applied for an authentication.

12. A computer readable storage medium having stored therein an authentication program according to any one of claims 7 to 11, the authentication program further comprising:
a step of receiving version information of an authentication system library of a client terminal device which has formed at least the specific information,
and wherein the authentication processing and the issue processing of the authentication identification information that correspond to a version indicated by the version information are executed.

13. An authentication server machine comprising:
receiving means for receiving at least specific information for specifying an authentication target for which an authentication is applied, and user specification information for specifying a user who is applying for an authentication;
authentication program selecting means for selecting an authentication program corresponding to the authentication target indicated by the specific information received by the receiving means; and
authentication processing means for executing an authentication processing for the authentication target based on the authentication program selected by the authentication program selecting means for a user indicated by the user specification information received by the receiving means.

14. An authentication server machine according to claim 13, further comprising:
issue program selecting means for selecting an identification information issue program corresponding to the authentication target indicated by the specific information,
and wherein the authentication processing means executes the authentication processing, and issues authentication identification information indicating that the authentication target has been authenticated and returns it to a user based on the identification information issue program selected by the issue program selecting means.

15. An authentication server machine according to claim 13 or 14, wherein the receiving means receives a plurality of identification information used for an authentication processing of an authentication target transmitted in an arbitrary order and order information indicating the arbitrary order, and comprises a recognizing means for recognizing the respective identification information by referring to the order information, and
the authentication processing means executes the authentication processing of the license, or executes the authentication processing and the issue processing of the authentication identification information, based on the identification information recognized by the recognizing means.

16. An authentication server machine according to claim 15, wherein the receiving means receives the plurality of identification information acquired from a client terminal device of a user, or a client terminal device and peripheral devices of a user, as the plurality of identification information used for the authentication processing of the authentication target.

17. An authentication server machine according to any one of claims 14 to 16, further comprising:
issuing means for issuing a plurality of authentication identification information indicating that the authentication target has been authenticated; and
designation information forming means for forming designation information for designating a transmission order of the plurality of authentication identification information issued by the issuing means,
and wherein the authentication processing means returns the designation information together with the plurality of authentication identification information to a client terminal device of a user who has applied for an authentication.

18. An authentication server machine according to any one of claims 13 to 17, wherein the receiving means receives at least version information of an authentication system library of a client terminal device which has formed the specific information, and
the authentication processing means executes the authentication processing and the issue processing of the authentication identification information that correspond to a version indicated by the version information.

19. A client terminal device comprising:
specific information forming means for forming specific information for specifying an authentication target for which an license authentication is applied;
user specification information forming means for forming user specification information for specifying a user who applies for an license authentication;
identification information acquiring means for acquiring a plurality of identification information from the client terminal device, or the client terminal device and peripheral devices thereof;
designation information forming means for forming designation information for designating a transmission order of the plurality of identification information acquired by the identification information acquiring means; and
transmitting means for transmitting the specific information, the user specification information, the plurality of identification information, and the designation information.

20. A client terminal device according to claim 19, wherein the transmitting means transmits version information of an authentication system library for performing formation, acquisition, and transmission of the specific information, the user specification information, the plurality of identification information, and the designation information.

21. An authentication system comprising:
a client terminal device connected to a predetermined network for transmitting at least information for specifying a user and information for specifying an authentication target for which an authentication is applied when applying an authentication of an authentication target; and
an authentication server machine connected to a predetermined network for specifying a user based on the information for specifying a user and executing an authentication processing for the specified user by selecting an authentication program corresponding to the authentication target for which an authentication has been applied based on the information for specifying the authentication target, and returning the authentication information to the client terminal of the user, when an authentication is applied from the client terminal device.

22. An authentication system according to claim 21, wherein
the authentication server machine has an identification information issue program for every authentication target, and
the authentication server machine selects an identification information issue program corresponding to the authentication target for which an authentication has been applied and issues identification information of an information form corresponding to the authentication target for which the authentication has been applied to the specified user.

23. An authentication system according to claim 21 or 22, wherein
the client terminal device has an authentication system library corresponding to the system, and
the client terminal device acquires the information for specifying a user from a client terminal device used by a user, or acquires the information for specifying a user from a client terminal device and peripheral devices thereof used by a user, based on the authentication system library.

24. An authentication system according to claim 23, wherein
the client terminal device arranges a plurality of information for specifying a user acquired from a client terminal device used by a user or a client terminal device and peripheral devices thereof used by a user in an arbitrary order, and transmits it together with information indicating the arbitrary order of the information to the authentication server machine, and
the authentication server machine refers to the information indicating the arbitrary order, and recognizes the information for specifying a user transmitted from the client terminal device to use it for an authentication.

25. An authentication system according to claim 24, wherein the client terminal device selects one arrangement order from among a plurality of patterns of arrangement order, and arranges the information for specifying a user according to the selected arrangement order.

26. An authentication system according to any one of claim 21 to 25,
wherein the information transmitted from the client terminal device to the authentication server machine is added with at least the information for specifying a user, and version information of an application program for forming and controlling information for specifying an authentication target for which an authentication is applied, and
the authentication server machine executes an authentication processing corresponding to a version of an application program of the client terminal device.

27. An authentication program to be executed on a computer, comprising:
a step of receiving specific information for specifying an authentication target for which an authentication is applied;
a step of receiving user specification information for specifying a user who is applying for an authentication;
a step of selecting an authentication program corresponding to the authentication target indicated by the specific information; and
a step of executing an authentication processing for the authentication target based on the selected authentication program for a user indicated by the user specification information.
